# EUROPÄISCHE PATENTSCHRIFT

(11) **EP 2 692 556 B1**
(45) Veröffentlichungstag und Bekanntmachung des Hinweises auf die Patenterteilung: **18.03.2020**
(21) Anmeldenummer: 13178550.3
(22) Anmeldetag: 30.07.2013
(51) Int. Cl.: B60G 17/0165, B60G 17/018

(54) **Verfahren und Vorrichtung zum Betreiben eines Fahrwerks**
Method and device for operating a vehicle suspension
Procédé et dispositif destinés à actionner une suspension de véhicule

(30) Priorität: 04.08.2012 DE 102012015492
(43) Veröffentlichungstag der Anmeldung: 05.02.2014
(73) Patentinhaber: AUDI AG, 85045 Ingolstadt (DE)
(72) Erfinder: Schindler, Andreas, 85055 Ingolstadt (DE); Göhrle, Christoph, 85049 Ingolstadt (DE); Sawodny, Oliver, 70186 Stuttgart (DE)

(56) Entgegenhaltungen:
- EP-A1- 0 412 719
- EP-A1- 1 873 736
- DE-A1-102010 029 947
- DE-A1-102012 218 937

## Beschreibung

Die vorliegende Erfindung betrifft ein Verfahren und eine Vorrichtung zum Betreiben eines zumindest semi-aktiven Fahrwerks eines Kraftfahrzeugs.

Mit steigendem Wohlstand und Lebensstandard wächst auch ein Anspruch nach Komfort auf der einen sowie ein Bedürfnis nach mehr Schutz und Sicherheit auf der anderen Seite. Bezogen auf Kraftfahrzeuge haben diese Bedürfnisse die Kraftfahrzeugentwicklung insbesondere in den Bereichen Fahrwerk und Fahrzeugregelsysteme geprägt. Ziel aktiver Fahrwerke und den dazugehörigen Fahrzeugregelsystemen ist es, Agilität, Fahrdynamik, Komfort und Sicherheit gegenüber passiven Fahrwerken weiter zu erhöhen.

Falls über eine vorhandene Fahrzeugsensorik ein Straßenhöhenprofil vor dem Fahrzeug gemessen und einem Fahrwerksregler übermittelt wird, sind bessere Regelstrategien möglich, um Komfort, Fahrsicherheit und Fahrdynamik zu erhöhen und Energieverbrauch zu vermindern.

Aus der Druckschrift DE 10 2010 018 902 A1 ist ein Verfahren zum Betreiben eines aktiven Fahrwerks eines Straßenfahrzeugs bekannt, wobei das Fahrwerk zumindest eine Federeinrichtung aufweist, die zwischen einem Fahrzeugaufbau und einem Radträger angeordnet ist und deren Parameter mittels einer Steuereinrichtung einstellbar sind. Mit der Sensoreinheit wird ferner eine mit dem Höhenprofil einer zurückzulegenden Fahrstrecke korrelierende Vorhersagegröße ermittelt. Sind anhand der ermittelten Vorhersagegröße periodisch sich wiederholende Höhenänderungen erkennbar, so wird die Federeinrichtung aperiodisch oder asymmetrisch zur Wiederholungsperiode zum Einleiten von Anregungen in den Fahrzeugaufbau angesteuert.

Aus der Druckschrift US 6,233,510 B1 ist ein Verfahren und ein System zur Vorhersage von Straßenbedingungen bekannt. Das dabei vorgestellte System umfasst eine Messeinheit, bspw. einen Laser, der im Vorderbereich eines Kraftfahrzeugs angeordnet ist und zur Messung einer vertikalen Erhebung der Straße in einem vorgegebenen Abstand zum Kraftfahrzeug genutzt wird. Eine Steuereinheit, welche mit der Messeinheit gekoppelt ist, umfasst eine Steuerlogik, um die Straßenbedingungen auf Basis der gemessenen vertikalen Erhebungen vorhersagen zu können und entsprechend bspw. das Hebesystem des Kraftfahrzeugs ansteuern zu können.

Die Druckschrift US 5,450,322 offenbart ein System zur Ansteuerung einer Federung eines Kraftfahrzeugs, wobei dazu eine Oberflächenbeschaffenheit einer Fahrbahn vor dem Kraftfahrzeug ermittelt wird. Dazu generiert ein Oberflächensensor ein Signal entsprechend der Größe der Rauhigkeit auf der Fahrbahnoberfläche in einem bestimmten vorgegebenen Abstand vor dem Kraftfahrzeug. Auf Basis dieses Signals wird ein Dämpfungskoeffizient des Kraftfahrzeugs nach Ablauf einer gewissen Verzögerungszeit entsprechend geändert.

Aus der Druckschrift DE 10 2010 013 178 A1 ist ein Verfahren zum Steuern einer Fahrdynamik eines eine Fahrbahn befahrenden Fahrzeugs bekannt. Dabei werden ein Fahrbahnprofil der befahrenen Fahrbahn kennzeichnenden Daten ermittelt. In Abhängigkeit dieser Daten wird sodann die Fahrdynamik gesteuert.

Aus der Druckschrift DE 10 2009 057 397 A1 ist ein aktives Aufhängungssystem und Verfahren zum Steuern der Höhe eines Fahrzeugs bekannt. Dort ist bspw. beschrieben, dass ein aktives Aufhängungssystem eine Information aus einer oder mehreren Eingabequellen empfängt, die sowohl interne als auch externe Fahrzeugeingaben umfassen und diese verwendet, um die Fahrzeughöhe aktiv zu steuern.

Aus der DE 103 44 053 A1 ist eine Federungsregelungsvorrichtung für ein Fahrzeug bekannt, die selbst auf einer groben Straße eine Federungsregelung passend durchführen kann, indem sie die Federungsregelung basierend auf einem Straßenoberflächenprofil einer aktuellen Straße ausführt. Dabei werden verschiedene Fahrzeugzustände berücksichtigt.

Aus der Druckschrift US 2004/0046335 A1 ist ein aktives Federungssystem für ein Kraftfahrzeug bekannt, welches Elemente umfasst, um einen Bewegungsablauf in Reaktion auf eine Fahrbahn zu entwickeln, auf welcher das Kraftfahrzeug fährt. Das System umfasst ein Lokalisierungssystem zum Lokalisieren des Fahrzeugs und ein System zum Abfragen eines Fahrbahnprofils im Verhältnis zu der Fahrzeugposition.

Die Druckschrift EP 0 412 719 A1 beschreibt ein Straßenoberflächen-Erfassungssystem für ein Fahrzeug mit einem Sender zum Richten elektromagnetischer Strahlung auf eine Straßenoberfläche vor dem Fahrzeug und einem Empfänger zum Empfangen reflektierter Strahlung. Dabei ist der Empfänger dazu ausgebildet, eine Amplitudenmodulation der reflektierten Strahlung zu erfassen, deren Träger in Übereinstimmung mit Unregelmäßigkeiten der Oberfläche amplitudenmoduliert ist. Außerdem umfasst das Straßenoberflächen-Erfassungssystem eine Einrichtung zum Differenzieren des Modulationssignals, um ein Steuersignal zu erzeugen, das den Straßenoberflächenzustand wiedergibt. Eine Fahrzeugsystemsteuerung ist dazu ausgebildet das Steuersignal zu empfangen und einen Betrieb des Fahrzeugs in Abhängigkeit von dem Steuersignal zu verändern.

Ein Verfahren zur Ansteuerung eines aktiven oder semi-aktiven vertikaldynamischen Systems in einer Radaufhängung eines Fahrzeugs ist in der Druckschrift DE 10 2010 029 947 A1 beschrieben. Dabei werden Abweichungen von einer völlig ebenen Fahrbahn mittels einer Sensorik erkannt und daraufhin das vertikaldynamische System zur Erzielung eines komfortablen oder sicheren Fahrverhaltens des Fahrzeugs unter Berücksichtigung dieser Abweichungen geeignet angesteuert.

Die Druckschrift EP 1 873 736 A1 beschreibt ein Verfahren und ein System zur Unterstützung eines Fahrers eines Kraftfahrzeugs bei einer Erkennung von Bodenschwellen.

Aus dem Stand der Technik ist allgemein ein vorausschauendes Fahrwerk bekannt, das einen Sensor umfasst, um ein Straßenhöhenprofil vor dem Fahrzeug zu erkennen, und aktive Elemente, die so darauf eingestellt werden können, dass der Fahrkomfort erhöht wird.

Allerdings ist keiner der Veröffentlichungen zu entnehmen, wie präzise ein Hindernis, wie bspw. ein Schlagloch, durch Ansteuerung des Fahrzeugs, wie bspw. durch ein Anheben der Räder, überfahren werden kann. Das bedeutet, dass eine konkrete und schnelle Ansteuerung einer im Kraftfahrzeug vorhandenen und für das Fahrverhalten verantwortlichen Aktuatorik, um Fahrkomfort und Fahrdynamik weiter zu verbessern, bislang nicht bekannt ist.

Es ist demnach eine Aufgabe der vorliegenden Erfindung, eine Möglichkeit vorzusehen, eine im Fahrwerk vorhandene Aktuatorik derart anzusteuern, dass noch bevor ein Hindernis überfahren wird, dieses Hindernis erkannt und entsprechend vor Erreichen dieses Hindernisses in geeigneter Weise reagiert wird.

Vor dem Hintergrund des Standes der Technik und zur Lösung der voranstehend genannten Aufgabe wird ein Verfahren mit den Merkmalen des Patentanspruchs 1 und eine Vorrichtung mit den Merkmalen des Patentanspruchs 10 bereitgestellt. Weitere Ausgestaltungen sind den entsprechenden Unteransprüchen zu entnehmen.

Erfindungsgemäß wird ein Verfahren zum Betreiben eines zumindest semi-aktiven Fahrwerks eines Fahrzeugs bereitgestellt. Bei dem erfindungsgemäßen Verfahren wird mittels mindestens einer Sensoreinheit ein Höhenprofil einer in Fahrtrichtung des Fahrzeugs vorausliegenden Fahrstrecke ermittelt und auf Basis des ermittelten Höhenprofils mindestens eine Aktuatoreinheit des Fahrzeugs durch eine Steuereinheit proaktiv angesteuert. Dabei wird ein im ermittelten Höhenprofil abgebildetes aktuelles Hindernis der Fahrstrecke basierend auf einer geometrischen Form des aktuellen Hindernisses einer von einer Mehrzahl von vordefinierten und hinterlegten Kategorien zugeordnet und auf Basis der zugeordneten Kategorie ein vorgegebenes Ansteuersignal an die mindestens eine Aktuatoreinheit gesendet. Die Aktuatoreinheit setzt das Ansteuersignal letztlich entsprechend um.

In Ausgestaltung des erfindungsgemäßen Verfahrens wird das Fahrwerk als voll aktives Fahrwerk gewählt.

In weiterer Ausgestaltung des erfindungsgemäßen Verfahrens wird im Vorfeld eine Auswahl auf einer Fahrstrecke möglicherweise auftretender Hindernisse auf Basis ihrer jeweiligen geometrischen Formen klassifiziert und daraus die Mehrzahl von Kategorien gebildet. Diese Mehrzahl von Kategorien wird dann abrufbar im Fahrzeug, in der Regel in einer geeigneten Speichereinheit hinterlegt. Im Vorfeld bedeutet im weitesten Sinne "vor Überfahren der Fahrstrecke seitens des Fahrzeugs".

Ferner wird jeder der Mehrzahl von Kategorien je ein Ansteuersignal als vorgegebenes Ansteuersignal zugeordnet, wobei das jeweilige vorgegebene Ansteuersignal auf Basis der in die jeweilige Kategorie klassifizierten Hindernisse berechnet wird.

Dabei ist es ferner denkbar, dass das vorgegebene Ansteuersignal an die geometrische Form des aktuellen Hindernisses aktuell, d. h. beim Überfahren der Fahrstrecke und Annähern an das aktuelle Hindernis angepasst wird.

Im erfindungsgemäßen Verfahren wird das Fahrwerk in einem virtuellen Fahrzeugmodell abgebildet und eine Auswirkung der Aktuatoransteuerung durch das Ansteuersignal auf das Fahrzeug bei Überfahrt des erkannten aktuellen Hindernisses simuliert und in Reaktion darauf die Aktuatoransteuerung derart modifiziert, dass zumindest ein vorzugebendes Kriterium erfüllt wird. Das bedeutet, dass anhand der Simulation bzw. der Simulationsergebnisse optimale Stellgrößen, um das aktuelle Hindernis möglichst gut zu kompensieren, berechnet werden.

Ferner wird in weiterer Ausgestaltung des erfindungsgemäßen Verfahrens die mindestens eine Aktuatoreinheit aus der Gruppe bestehend aus Federfußpunktverstellung mit Verstelldämpfer, Wegverstellung zwischen Rad und Aufbau und möglichen Kombinationen daraus ausgewählt.

Das erfindungsgemäße Verfahren erlaubt, die mindestens eine Aktuatoreinheit bzw. allgemein die Aktuatorik eines Kraftfahrzeugs besser anzusteuern, um Fahrkomfort und Fahrdynamik weiter zu verbessern. Dies wird durch ein erfindungsgemäß ermöglichtes, proaktives Ansteuern der für das Fahrverhalten verantwortlichen Aktuatorik, d. h. ein Ansteuern noch bevor das Hindernis überfahren wird, ermöglicht. So wird bspw. bei Ermittlung eines einseitigen Schlaglochs ein Entlasten bzw. Anheben zuerst eines Vorderrads des Kraftfahrzeugs und danach eines Hinterrads des Kraftfahrzeugs, um das Schlagloch nicht zu spüren, vor Erreichen des Schlaglochs ermöglicht. Das erfindungsgemäße Verfahren erlaubt es, die Räder des Kraftfahrzeugs proaktiv vertikal anzuziehen, vorzugsweise mit einer maximal möglichen Verstellgeschwindigkeit, so dass die Räder angezogen sind, noch bevor bspw. eine Bodenwelle erreicht ist. Danach werden die Räder dann wieder automatisch ausgefahren. Zu beachten ist dabei, dass zum Einen die Verstellgeschwindigkeit der Aktuatorik bzw. des mindestens einen Aktuators begrenzt ist und ferner die Aktuatordynamik, d. h. die Zeit, bis der Aktuator in der Lage ist, ein Sollsignal umzusetzen, ebenfalls zu berücksichtigen ist. Bei einer Überfahrt einer höheren Schwelle, wie bspw. einem sogenannten Höcker, ist zu beachten, dass der Verstellweg der Aktuatorik mechanisch begrenzt ist. Falls eine Schwelle höher ist, als durch den möglichen Verstellweg kompensierbar, wird das Fahrzeug zunächst insgesamt vertikal angehoben, sobald das Hindernis von der Sensorik erkannt wird. Dann steht darauffolgend mehr Verstellweg der Aktuatorik zur Verfügung, um die Räder vertikal anzuziehen, wodurch das Hindernis besser kompensiert werden kann.

Eine erfindungswesentliche Idee, die es in den oben genannten Szenarien erlaubt, vorausschauend, d. h. vor Erreichen des Hindernisses eine geeignete Ansteuerung der Aktuatorik vorzunehmen, sieht eine Klassifizierung, d. h. Einteilung potentiell auf einer Fahrstrecke auftretender Hindernisse in Kategorien vor. Die Klassifizierung in Kategorien erfolgt dabei basierend auf einer geometrischen Form eines jeweiligen Hindernisses. Bei dem Hindernis kann es sich bspw. um ein Schlagloch, insbesondere ein einseitiges Schlagloch, eine Schwelle, eine hohe Schwelle usw. handeln. Wird nun seitens einer dazu vorgesehenen Sensoreinheit ein Hindernis auf der vorausliegenden Fahrbahn bzw. Fahrstrecke detektiert, wird erfindungsgemäß überprüft, in welche der vordefinierten Kategorien das detektierte aktuelle Hindernis passt. Daraufhin wird ein vorher berechnetes, einer jeweiligen Kategorie zugeordnetes Ansteuersignal für das aktuelle Hindernis, welches eben einer entsprechenden Art Hindernis der jeweiligen Kategorie entspricht, an die mindestens eine Aktuatoreinheit geschickt, um das Hindernis möglichst gut zu kompensieren und damit den Fahrkomfort und die Fahrdynamik möglichst gut zu verbessern. Im Falle eines Schlaglochs kann dies ein proaktives einseitiges Anheben eines Rads oder im Falle einer mittig gelegenen Schwelle ein proaktives Anziehen beider Räder bedeuten. Das vorher berechnete und einer jeweiligen Kategorie zugeordnete Ansteuersignal kann durch die genaue Geometrie des aktuellen Hindernisses noch weiter optimiert, d. h. angepasst werden.

Die Anpassung des bereits vorher berechneten Ansteuersignals an das aktuelle Hindernis bzw. dessen genaue Geometrie erfolgt dabei bspw. mittels einer sogenannten Online-Optimierung.

Die vorliegende Erfindung betrifft ferner eine Vorrichtung zum Betreiben eines zumindest semi-aktiven Fahrwerks eines Fahrzeugs. Die erfindungsgemäße Vorrichtung umfasst mindestens eine Sensoreinheit, die dazu ausgelegt ist, ein Höhenprofil einer in Fahrtrichtung des Fahrzeugs vorausliegende Fahrstrecke zu ermitteln und an eine Steuereinheit weiterzuleiten, die Steuereinheit, die dazu konfiguriert ist, auf Basis des ermittelten Höhenprofils mindestens eine Aktuatoreinheit des Fahrzeugs proaktiv anzusteuern, wobei ein im ermittelten Höhenprofil abgebildetes aktuelles Hindernis der Strecke basierend auf einer geometrischen Form des aktuellen Hindernisses einer von einer Mehrzahl von vordefinierten und hinterlegten Kategorien zugeordnet und auf Basis der zugeordneten Kategorie ein vorgegebenes Ansteuersignal an die mindestens eine Aktuatoreinheit gesendet wird.

In Ausgestaltung der erfindungsgemäßen Vorrichtung umfasst die Vorrichtung ferner die mindestens eine Aktuatoreinheit, die mit der Steuereinheit gekoppelt und dazu konfiguriert ist, das von der Steuereinheit übermittelte Ansteuersignal entsprechend umzusetzen.

In weiterer Ausgestaltung der erfindungsgemäßen Vorrichtung ist das Fahrwerk ein voll aktives Fahrwerk.

Die erfindungsgemäße Vorrichtung kann ferner ein mit der Steuereinheit gekoppeltes Klassifizierungsmodul umfassen, das dazu ausgelegt ist, im Vorfeld eine Auswahl auf einer Fahrstrecke möglicherweise auftretender Hindernisse auf Basis ihrer jeweiligen geometrischen Formen zu klassifizieren und daraus die Mehrzahl von Kategorien zu bilden.

Das Klassifizierungsmodul kann ferner dazu ausgelegt sein, jeder der Mehrzahl von Kategorien je ein Ansteuersignal als vorgegebenes Ansteuersignal zuzuordnen, wobei das jeweilige vorgegebene Ansteuersignal auf Basis der in die jeweilige Kategorie klassifizierten Hindernisse zu berechnen ist.

Die erfindungsgemäße Vorrichtung umfasst ferner eine mit der Steuereinheit gekoppelte Recheneinheit, die dazu ausgelegt ist, das Fahrwerk in einem virtuellen Fahrzeugmodell abzubilden und eine Auswirkung der Aktuatoransteuerung durch das Ansteuersignal auf das Fahrzeug bei Überfahrt des aktuellen Hindernisses zu simulieren und in Reaktion darauf die Aktuatoransteuerung derart zu modifizieren, dass zumindest ein vorzugebendes Kriterium erfüllt wird. Hierbei wird erfindungsgemäß basierend auf einem virtuellen Fahrzeugmodell eine Auswirkung des Ansteuersignals auf die Karosserie und Radbewegung bei Überfahrt des aktuell erkannten Hindernisses ermittelt und mittels einer Optimierung Stellgrößen dermaßen berechnet, dass ein Kriterium möglichst gut erfüllt wird, wie bspw. eine möglichst geringe Beschleunigung in der Karosserie, um den Komfort zu maximieren.

In weiterer Ausgestaltung der erfindungsgemäßen Vorrichtung ist das Klassifizierungsmodul Teil der Steuereinheit. Ferner kann auch die Recheneinheit Teil der Steuereinheit sein.

Bei der mindestens einen Aktuatoreinheit kann es sich bspw. um eine Federfußpunktverstellung mit einem Verstelldämpfer, eine Wegverstellung zwischen Rad und Aufbau oder um eine mögliche Kombination der voranstehend genannten Bauteile handeln.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen ausführlich beschrieben.

Weitere Vorteile und Ausgestaltungen der Erfindung ergeben sich aus der Beschreibung und den beiliegenden Zeichnungen.
Figur 1 zeigt in schematischer Darstellung eine Federfußpunktverstellung als beispielhafte Aktuatoreinheit.
Figur 2 zeigt in schematischer Darstellung eine Anwendung einer Ausführungsform des erfindungsgemäßen Verfahrens.

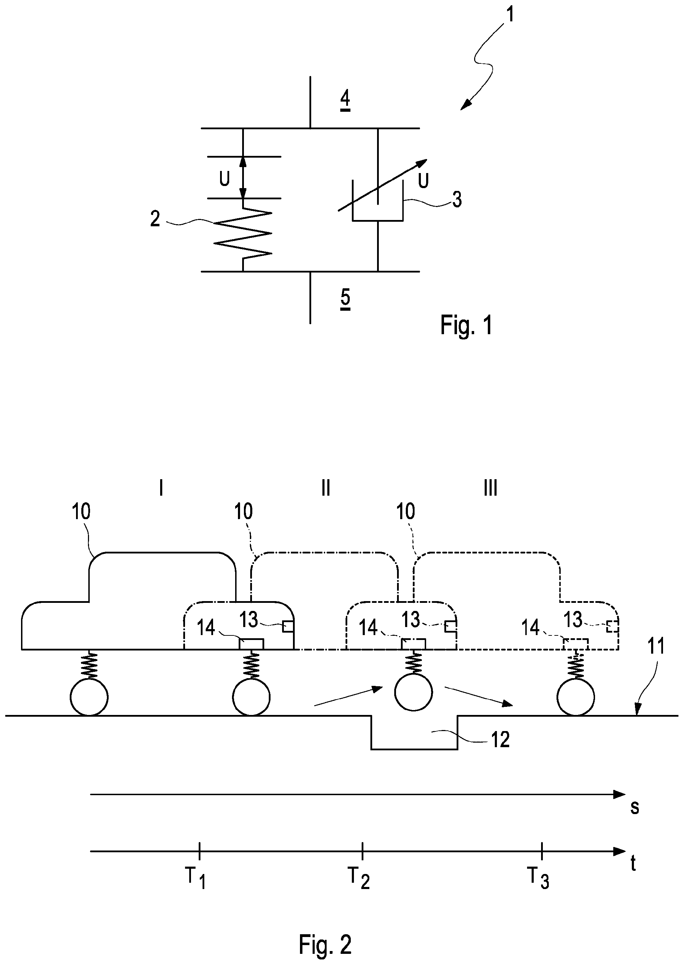

Figur 1 zeigt eine beispielhafte Federfußpunktverstellung mit Verstelldämpfer, wie sie als eine mögliche Aktuatoreinheit für eine Ausführungsform des erfindungsgemäßen Verfahrens verwendet werden kann. Gezeigt ist eine Federfußpunktverstellung 1 mit einer Aufhängungsfeder 2 und einem Verstelldämpfer 3, welche beide zwischen einer Fahrzeugkarosserie 4 und einem Rad 5 angeordnet sind. Bei dem Verstelldämpfer kann es sich bspw. um einen stufenlos verstellbaren, hydraulischen Schwingungsdämpfer handeln. Diese Federfußpunktverstellung 1 wird mittels einer hier nicht gezeigten Sensoreinheit angesteuert, und zwar auf Basis eines von der Sensoreinheit ermittelten Höhenprofils proaktiv, das bedeutet, bevor ein im Höhenprofil abgebildetes aktuelles Hindernis einer in Fahrtrichtung des Kraftfahrzeugs vorausliegenden Fahrstrecke überfahren wird. Dazu wird seitens der hier nicht gezeigten Sensoreinheit das Höhenprofil der in Fahrtrichtung des Fahrzeugs vorausliegenden Fahrstrecke ermittelt und ein im ermittelten Höhenprofil abgebildetes aktuelles Hindernis der Strecke basie-rend auf einer geometrischen Form des aktuellen Hindernisses einer von einer Mehrzahl von vordefinierten und hinterlegten Kategorien zugeordnet. Auf Basis der dem aktuellen Hindernis zugeordneten Kategorie wird seitens der Steuereinheit ein vorgegebenes Ansteuersignal an die Federfußpunktverstellung 1 gesendet, die entsprechend dem Ansteuersignal das Rad in seiner Höhe, d. h. in seinem Abstand zur Unterlage bzw. zum Aufbau bzw. Karosserie 4 des Kraftfahrzeugs ändert.

Figur 2 zeigt in schematischer Darstellung ein Kraftfahrzeug 10, in welchem eine Ausführungsform der erfindungsgemäßen Vorrichtung vorgesehen ist, um eine Ausführungsform des erfindungsgemäßen Verfahrens durchführen zu können.

Gezeigt ist ein Kraftfahrzeug 10, welches auf einer Fahrstrecke 11 entlangfährt. Die Fahrstrecke 11 umfasst ein Schlagloch 12, welches seitens des Fahrzeugs 10 zu überfahren ist. Zu einem Zeitpunkt T₁ befindet sich das Fahrzeug an einer Position I noch vor dem Schlagloch 12. Das bedeutet, dass sich das Schlagloch 12 auf einer in Fahrtrichtung des Fahrzeugs vorausliegenden Fahrstrecke befindet. In dem Kraftfahrzeug 10 ist nunmehr eine Sensoreinheit 13 angeordnet, welche ein Höhenprofil der in Fahrtrichtung des Fahrzeugs vorausliegenden Fahrstrecke 11 ermittelt. In dem seitens der Sensoreinheit 13 ermittelten Höhenprofil wird das aktuelle Hindernis, nämlich hier das Schlagloch 12 abgebildet, d. h. erkannt. Das ermittelte Höhenprofil wird an eine hier nicht gezeigte Steuereinheit des Fahrzeugs 10 übermittelt. Basierend auf der geometrischen Form des Schlagloches 12 und seiner Position innerhalb des Höhenprofils, d. h. bspw. ob es sich um ein einseitiges oder ein mittiges Schlagloch handelt, wird es seitens der Steuereinheit einer von einer Mehrzahl von vordefinierten hinterlegten Kategorien zugeordnet. Auf Basis der zugeordneten Kategorie wird seitens der Steuereinheit ein vorgegebenes, der entsprechenden Kategorie zugeordnetes Ansteuersignal aus einer der Steuereinheit zugänglichen Speichereinheit abgerufen und an mindestens eine Aktuatoreinheit 14, wie bspw. eine in Figur 1 gezeigte Federfußpunktverstellung des Kraftfahrzeugs versendet. Wichtig dabei ist, dass dieses Ansteuersignal seitens der Steuereinheit zu der Aktuatoreinheit 14 im Vorfeld zu einem Überfahren des jeweiligen Hindernisses, hier des Schlagloches, durch das Kraftfahrzeug übersendet wird, so dass die Aktuatoreinheit 14 vor Erreichen des Schlagloches 12 bereits aktiv wird und demnach zu einem Zeitpunkt T₂, wie durch punkt-gestrichelte Linie in Position II des Kraftfahrzeugs 10 angezeigt, die Möglichkeit hat, die Räder oder bspw. im Falle eines einseitigen Schlagloches nur ein Rad nämlich dieses, was das Schlagloch überfahren würde, derart anzuheben, dass das Kraftfahrzeug quasi auf drei Rädern den Bereich, in welchem sich das Schlagloch befindet, überfährt, so dass das betroffene Rad aufgrund seiner Anhebung durch die Aktuatoreinheit 14, d. h. die Federfußpunktverstellung nicht schlagartig in das Schlagloch absackt, sondern vielmehr kurz vor dem Schlagloch in geeigneter Weise angezogen und nach dem Schlagloch dann zu einem Zeitpunkt T₃ wieder, wie in Position III durch gestrichelte Linie gezeigt, auf die Straße abgelassen wird. Demnach wird mittels des erfindungsgemäßen Verfahrens eine jeweilige Aktuatoreinheit, hier eine Federfußpunktverstellung des Kraftfahrzeugs durch die Steuereinheit proaktiv angesteuert. Bei der Aktuatoreinheit kann es sich um eine Federfußpunktverstellung wie in Figur 1 gezeigt, einen Verstelldämpfer, welcher eine Dämpfungskonstante variiert, oder um beides kombiniert handeln. Ferner kann es sich auch um eine Wegverstellung zwischen Rad und Aufbau bzw. Karosserie, wie bspw. mittels Linearmotoren handeln. Ferner ist anzumerken, dass das abrufbare, einer jeweiligen Kategorie zugeordnete Ansteuersignal in Abhängigkeit von dem konkreten aktuellen Hindernis seitens der Steuereinheit der genauen Geometrie des aktuellen Hindernisses noch angepasst werden kann und somit quasi auf das aktuelle Hindernis genau optimiert wird. Bei der proaktiven Ansteuerung der mindestens einen Aktuatoreinheit muss natürlich die Reaktionszeit der Aktuatoreinheit, die aktuelle Geschwindigkeit des Kraftfahrzeugs sowie die zum Zeitpunkt der Ansteuerung vorliegende Distanz zum Schlagloch berücksichtigt werden, so dass das entsprechende Rad genau bei Erreichen und Überfahren des Hindernisses entsprechend angesteuert wird.

Die kurzzeitige an die Größe des Schlagloches angepasste und gesteuerte Anhebung eines jeweiligen Rades im Falle eines einseitigen Schlagloches und das gesteuerte langsame Absenken des Rades nach Überfahren des Schlagloches bewirkt eine gegenüber dem direkten Überfahren des Schlagloches starke Dämpfung, so dass das Schlagloch als solches seitens des Fahrers nicht als störend empfunden wird, da sich das Kraftfahrzeug zwar leicht auf der jeweiligen Seite des Schlagloches absenkt, jedoch dies nur sehr langsam vonstatten geht, während bei direktem Überfahren eines Schlagloches das Kraftfahrzeug abrupt über eine scharfe Kante in das Schlagloch absackt, was vom Fahrer als sehr störend empfunden wird und zudem für das Kraftfahrzeug schädigend wirken kann.

## Patentansprüche

1. Verfahren zum Betreiben eines zumindest semi-aktiven Fahrwerks eines Fahrzeugs (10), bei dem mittels mindestens einer Sensoreinheit (13) ein Höhenprofil einer in Fahrtrichtung des Fahrzeugs (10) vorausliegenden Fahrstrecke (11) ermittelt und auf Basis des ermittelten Höhenprofils mindestens eine Aktuatoreinheit (14) des Fahrzeugs (10) durch eine Steuereinheit proaktiv angesteuert wird, wobei ein im ermittelten Höhenprofil abgebildetes aktuelles Hindernis (12) der Strecke (11) basierend auf einer geometrischen Form des aktuellen Hindernisses (12) einer von einer Mehrzahl von vordefinierten und hinterlegten Kategorien zugeordnet und auf Basis der zugeordneten Kategorie ein vorgegebenes Ansteuersignal an die mindestens eine Aktuatoreinheit (14) gesendet wird, welche das Ansteuersignal entsprechend umsetzt, wobei das Fahrwerk in einem virtuellen Fahrzeugmodell abgebildet und eine Auswirkung der Aktuatoransteuerung durch das Ansteuersignal auf das Fahrzeug bei Überfahrt über das aktuelle Hindernis (12) simuliert und in Reaktion darauf die Aktuatoransteuerung derart modifiziert wird, dass zumindest ein vorzugebendes Kriterium erfüllt wird.

2. Verfahren nach Anspruch 1, bei dem das Fahrwerk als aktives Fahrwerk gewählt wird.

3. Verfahren nach Anspruch 1 oder 2, bei dem im Vorfeld eine Auswahl auf einer Fahrstrecke (11) möglicherweise auftretender Hindernisse auf Basis ihrer jeweiligen geometrischen Form klassifiziert und daraus die Mehrzahl von Kategorien gebildet wird.

4. Verfahren nach Anspruch 3, bei dem jeder der Mehrzahl von Kategorien je ein Ansteuersignal als vorgegebenes Ansteuersignal zugeordnet wird, wobei das jeweilige vorgegebene Ansteuersignal auf Basis der in die jeweilige Kategorie klassifizierten Hindernisse berechnet wird.

5. Verfahren nach einem der voranstehenden Ansprüche, bei dem das vorgegebene Ansteuersignal an die geometrische Form des aktuellen Hindernisses (12) angepasst wird.

6. Verfahren nach einem der voranstehenden Ansprüche, bei dem die mindestens eine Aktuatoreinheit (14) ausgewählt wird aus der Gruppe bestehend aus Federfußpunktverstellung, Verstelldämpfer, Wegverstellung zwischen Rad und Aufbau und mögliche Kombinationen daraus.

7. Verfahren nach einem der voranstehenden Ansprüche, bei dem das Umsetzen des vorgegebenen Ansteuersignals ein proaktives Anheben des Fahrzeugs vor Überfahren einer Straßenerhebung bewirkt.

8. Verfahren nach einem der voranstehenden Ansprüche, bei dem das Umsetzen des vorgegebenen Ansteuersignals ein proaktives Anziehen von Rädern des Fahrzeugs vor Überfahren einer Straßenerhebung bewirkt.

9. Verfahren nach einem der voranstehenden Ansprüche, bei dem das Umsetzen des vorgegebenen Ansteuersignals ein einseitiges proaktives Anziehen bzw. Abheben von Vorder- und/oder Hinterrädern des Fahrzeugs bei Überfahren eines Schlaglochs auf einer Seite der Fahrstrecke bewirkt.

10. Vorrichtung zum Betreiben eines zumindest semi-aktiven Fahrwerks eines Fahrzeugs (10), wobei die Vorrichtung mindestens aufweist: eine Sensoreinheit (13), die dazu ausgelegt ist, ein Höhenprofil einer in Fahrtrichtung des Fahrzeugs (10) vorausliegenden Fahrstrecke (11) zu ermitteln und an eine Steuereinheit weiterzuleiten, die Steuereinheit, die dazu konfiguriert ist, auf Basis des ermittelten Höhenprofils mindestens eine Aktuatoreinheit (14) des Fahrzeugs (10) proaktiv anzusteuern, wobei ein im ermittelten Höhenprofil abgebildetes aktuelles Hindernis (12) der Strecke (11) basierend auf einer geometrischen Form des aktuellen Hindernisses (12) einer von einer Mehrzahl von vordefinierten und hinterlegten Kategorien zugeordnet und auf Basis der zugeordneten Kategorie ein vorgegebenes Ansteuersignal an die mindestens eine Aktuatoreinheit (14) gesendet wird, wobei die Vorrichtung eine mit der Steuereinheit gekoppelte Recheneinheit umfasst, die dazu ausgelegt ist, das Fahrwerk in einem virtuellen Fahrzeugmodell abzubilden und eine Auswirkung der Aktuatoransteuerung durch das Ansteuersignal auf das Fahrzeug (10) bei Überfahrt über das aktuelle Hindernis (12) zu simulieren und in Reaktion darauf die Aktuatoransteuerung derart zu modifizieren, dass zumindest ein vorzugebendes Kriterium erfüllt wird.

11. Vorrichtung nach Anspruch 10, die ferner die Aktuatoreinheit (14) umfasst, die mit der Steuereinheit gekoppelt und dazu konfiguriert ist, das von der Steuereinheit übermittelte Ansteuersignal entsprechend umzusetzen.

12. Vorrichtung nach Anspruch 10 oder 11, bei der das Fahrwerk ein aktives Fahrwerk ist.

13. Vorrichtung nach einem der Ansprüche 10 bis 12, die ferner ein mit der Steuereinheit gekoppeltes Klassifizierungsmodul umfasst, das dazu ausgelegt ist, im Vorfeld eine Auswahl auf einer Fahrstrecke möglicherweise auftretender Hindernisse auf Basis ihrer jeweiligen geometrischen Form zu klassifizieren und daraus die Mehrzahl von Kategorien zu bilden.

14. Vorrichtung nach Anspruch 13, bei der das Klassifizierungsmodul dazu ausgelegt ist, jeder der Mehrzahl von Kategorien je ein Ansteuersignal als vorgegebenes Ansteuersignal zuzuordnen, wobei das jeweilige vorgegebene Ansteuersignal auf Basis der in die jeweilige Kategorie klassifizierten Hindernisse zu berechnen ist.

15. Vorrichtung nach einem der Ansprüche 13 oder 14, bei der das Klassifizierungsmodul Teil der Steuereinheit ist.

16. Vorrichtung nach einem der Ansprüche 10 oder 15, bei der die Recheneinheit Teil der Steuereinheit ist.

17. Vorrichtung nach einem der Ansprüche 10 bis 16, bei der die mindestens eine Aktuatoreinheit (14) ausgewählt ist aus der Gruppe bestehend aus Federfußpunktverstellung, Verstelldämpfer, Wegverstellung zwischen Rad und Aufbau und mögliche Kombinationen daraus.

## Claims

1. Method for operating an at least semi-active vehicle suspension of a vehicle (10), in the case of which by means of at least one sensor unit (13) a height profile of a driving route (11) lying ahead in direction of travel of the vehicle (10) is detected and on the basis of the detected height profile at least one actuator unit (14) of the vehicle (10) is proactively controlled by a control unit, wherein an actual obstacle (12), mapped in the detected height profile, of the route (11) is assigned to one of a plurality of predefined and stored categories, based on a geometrical shape of the actual obstacle (12), and on the basis of the assigned category a predetermined control signal is transmitted to the at least one actuator unit (14) which implements the control signal accordingly, wherein the vehicle suspension is mapped in a virtual vehicle model and an effect of the actuator control, on the part of the control signal, on the vehicle when driving over the actual obstacle (12) is simulated and in reaction thereto the actuator control is modified such that at least one predetermined criterion is fulfilled.

2. Method according to claim 1, in which the vehicle suspension is selected as an active vehicle suspension.

3. Method according to claim 1 or 2, in which pre-emptively a selection of obstacles possibly occurring on a driving route (11) is classified on the basis of their respective geometrical form and therefrom the plurality of categories is formed.

4. Method according to claim 3, in which a control signal as predetermined control signal is assigned in each case to each of the multiplicity of categories, wherein the respective predetermined control signal is calculated on the basis of the obstacles classified in the respective category.

5. Method according to any of the preceding claims, in which the predetermined control signal is adapted to the geometrical shape of the actual obstacle (12).

6. Method according to any of the preceding claims, in which the at least one actuator unit (14) is selected from the group comprising spring mount adjustment, variable dampers, path adjustment between wheel and body and possible combinations thereof.

7. Method according to any of the preceding claims, in which the implementation of the predetermined control signal effects a proactive lifting of the vehicle prior to driving over a road elevation.

8. Method according to any of the preceding claims, in which the implementation of the predetermined control signal effects a proactive tightening of wheels of the vehicle prior to driving over a road elevation.

9. Method according to any of the preceding claims, in which the implementation of the predetermined control signal effects a proactive tightening or lifting of front and/or rear wheels of the vehicle when driving over a pothole on one side of the driving route.

10. Device for operating an at least semi-active vehicle suspension of the vehicle (10), wherein the device has at least: one sensor unit (13), which is configured to determine a height profile of a driving route (11) lying ahead in direction of travel of the vehicle (10) and to forward it to a control unit, the control unit, which is configured on the basis of the determined height profile proactively to control at least one actuator unit (14) of the vehicle (10), wherein an actual obstacle (12), mapped in the detected height profile, of the route (11) is assigned based on a geometrical shape of the actual obstacle (12) to one of a plurality of predefined and saved categories and on the basis of the assigned category a predetermined control signal is transmitted to the at least one actuator unit (14), wherein the device includes a computing unit coupled with the control unit which is configured to map the vehicle suspension in a virtual vehicle model and to simulate an effect of the actuator control on the part of the actuator signal on the vehicle (10) when driving over the actual obstacle (12) and in reaction thereto to modify the actuator control such that at least one predetermined criterion is fulfilled.

11. Device according to claim 10, which furthermore includes the actuator unit (14), which is coupled with the control unit and is configured to implement accordingly the control signal transmitted from the control unit.

12. Device according to claim 10 or 11, in which the vehicle suspension is an active vehicle suspension.

13. Device according to any of claims 10 to 12, which furthermore includes a classification module coupled with the control unit which is configured pre-emptively to classify a selection of obstacles possibly occurring on a driving route on the basis of their respective geometrical form and therefrom to form the plurality of categories.

14. Device according to claim 13, in which the classification module is configured to assign to each of the plurality of categories in each case one control signal as a predetermined control signal, wherein the respective predetermined control signal is to be calculated on the basis of the obstacles classified in the respective category.

15. Device according to any of claims 13 or 14, in which the classification module is part of the control unit.

16. Device according to any of claims 10 or 15, in which the computing unit is part of the control unit.

17. Device according to any of claims 10 to 16, in which the at least one actuator unit (14) is selected from the group comprising spring mount adjustment, variable dampers, path adjustment between wheel and body and possible combinations thereof.

## Revendications

1. Procédé pour le fonctionnement d'un châssis au moins semi-actif d'un véhicule (10), dans lequel un profil de hauteur d'un parcours (11) à venir dans le sens de circulation du véhicule (10) est déterminé au moyen d'au moins une unité de capteur (13) et au moins une unité d'actionnement (14) du véhicule (10) est commandée de manière proactive par une unité de commande sur la base du profil de hauteur déterminé, dans lequel un obstacle actuel (12) représenté dans le profil de hauteur déterminé du parcours (11) est associé à une catégorie d'une pluralité de catégories prédéfinies et enregistrées sur la base d'une forme géométrique de l'obstacle actuel (12) et sur la base de la catégorie associée, un signal de commande prédéfini est envoyé à l'au moins une unité d'actionnement (14), laquelle convertit le signal de commande en conséquence, dans lequel le châssis est représenté dans un modèle de véhicule virtuel et un effet de la commande d'actionneur par le signal de commande sur le véhicule lors du passage sur l'obstacle actuel (12) est simulé et en réaction à cela, la commande d'actionneur est modifiée de sorte qu'au moins un critère à prédéfinir est rempli.

2. Procédé selon la revendication 1, dans lequel le châssis est sélectionné en tant que châssis actif.

3. Procédé selon la revendication 1 ou 2, dans lequel une sélection d'obstacles susceptibles d'apparaître sur un parcours (11) est classée en amont sur la base de leur forme géométrique et la pluralité de catégories est formée à partir de celles-ci.

4. Procédé selon la revendication 3, dans lequel respectivement un signal de commande est associé en tant que signal de commande prédéfini à chacune de la pluralité de catégories, dans lequel le signal de commande prédéfini respectif est calculé sur la base des obstacles classés dans la catégorie respective.

5. Procédé selon l'une quelconque des revendications précédentes, dans lequel le signal de commande prédéfini est adapté à la forme géométrique de l'obstacle actuel (12).

6. Procédé selon l'une quelconque des revendications précédentes, dans lequel l'au moins une unité d'actionnement (14) est sélectionnée à partir du groupe constitué par un dispositif de réglage de pied de ressort, un amortisseur de réglage, un dispositif de réglage de distance entre roue et carrosserie et leurs possibles combinaisons.

7. Procédé selon l'une quelconque des revendications précédentes, dans lequel la conversion du signal de commande prédéfini entraîne un levage proactif du véhicule avant le passage d'un relèvement de route.

8. Procédé selon l'une quelconque des revendications précédentes, dans lequel la conversion du signal de commande prédéfini entraîne un serrage proactif des roues du véhicule avant le passage d'un relèvement de route.

9. Procédé selon l'une quelconque des revendications précédentes, dans lequel la conversion du signal de commande prédéfini entraîne un serrage ou soulèvement proactif unilatéral de roues avant et/ou arrière du véhicule lors du passage d'un nid-de-poule d'un côté du parcours.

10. Dispositif pour le fonctionnement d'un châssis au moins semi-actif d'un véhicule (10), dans lequel le dispositif présente au moins : une unité de capteur (13), qui est conçue pour déterminer un profil de hauteur d'un parcours (11) à venir dans le sens de circulation du véhicule (10) et le transmettre à une unité de commande, l'unité de commande, qui est configurée pour commander de manière proactive au moins une unité d'actionnement (14) du véhicule (10) sur la base du profil de hauteur déterminé, dans lequel un obstacle actuel (12) représenté dans le profil de hauteur déterminé du parcours (11) est associé à une catégorie d'une pluralité de catégories prédéfinies et enregistrées sur la base d'une forme géométrique de l'obstacle actuel (12) et sur la base de la catégorie associée, un signal de commande prédéfini est envoyé à l'au moins une unité d'actionnement (14), dans lequel le dispositif comprend une unité de calcul couplée à l'unité de commande, qui est conçue pour représenter le châssis dans un modèle de véhicule virtuel et simuler un effet de la commande d'actionneur par le signal de commande sur le véhicule (10) lors du passage sur l'obstacle actuel (12) et modifier en réaction à cela, la commande d'actionneur de sorte qu'au moins un critère à prédéfinir est rempli.

11. Dispositif selon la revendication 10, qui comprend en outre l'unité d'actionnement (14), qui est couplée à l'unité de commande et est configurée pour convertir en conséquence le signal de commande transmis par l'unité de commande.

12. Dispositif selon la revendication 10 ou 11, dans lequel le châssis est un châssis actif.

13. Dispositif selon l'une quelconque des revendications 10 à 12, qui comprend en outre un module de classification couplé à l'unité de commande, qui est conçu pour classer en amont une sélection d'obstacles susceptibles d'apparaître sur un parcours sur la base de leur forme géométrique et former la pluralité de catégories à partir de celles-ci.

14. Dispositif selon la revendication 13, dans lequel le module de classification est conçu pour associer respectivement un signal de commande en tant que signal de commande prédéfini à chacune de la pluralité de catégories, dans lequel le signal de commande prédéfini respectif doit être calculé sur la base des obstacles classés dans la catégorie respective.

15. Dispositif selon l'une quelconque des revendications 13 ou 14, dans lequel le module de classification fait partie de l'unité de commande.

16. Dispositif selon l'une quelconque des revendications 10 ou 15, dans lequel l'unité de calcul fait partie de l'unité de commande.

17. Dispositif selon l'une quelconque des revendications 10 à 16, dans lequel l'au moins une unité d'actionnement (14) est sélectionnée à partir du groupe constitué par un dispositif de réglage de pied de ressort, un amortisseur de réglage, un dispositif de réglage de distance entre roue et carrosserie et leurs possibles combinaisons.
